# EUROPÄISCHE PATENTSCHRIFT

(11) **EP 3 427 906 B1**
(45) Veröffentlichungstag und Bekanntmachung des Hinweises auf die Patenterteilung: **22.02.2023**
(21) Anmeldenummer: 18183211.4
(22) Anmeldetag: 12.07.2018
(51) Int. Cl.: B25J 9/16, A47L 9/28

(54) **VERFAHREN ZUM BETRIEB EINES SICH SELBSTTÄTIG FORTBEWEGENDEN ROBOTERS**
METHOD FOR OPERATING AN AUTOMATICALLY MOVING ROBOT
PROCÉDÉ DE FONCTIONNEMENT D'UN ROBOT EN MOUVEMENT AUTOMATIQUE

(30) Priorität: 14.07.2017 DE 102017115847
(43) Veröffentlichungstag der Anmeldung: 16.01.2019
(73) Patentinhaber: Vorwerk & Co. Interholding GmbH, 42275 Wuppertal (DE)
(72) Erfinder: Hillen, Lorenz, 42287 Wuppertal (DE)
(74) Vertreter: Müller, Enno

(56) Entgegenhaltungen:
- EP-A1- 3 096 021
- WO-A1-2015/007315
- DE-A1-102005 019 908
- DE-A1-102015 224 308

## Beschreibung

### Gebiet der Technik

Die Erfindung betrifft ein Verfahren zum Betrieb eines sich selbsttätig fortbewegenden Roboters, wobei ein Steuerbefehl zum Eröffnen eines Servicemodus an den Roboter übermittelt wird, wobei in dem Servicemodus vordefinierte Servicetätigkeiten durchgeführt werden und ein Service für den Roboter bereitgestellt wird.

Des Weiteren betrifft die Erfindung ein System aus einem eine Bilderfassungseinrichtung aufweisenden, sich selbsttätig fortbewegenden Roboter, einem externen Endgerät zur Anzeige eines optischen Codes und einer externen Serviceeinrichtung zum Bereitstellen eines Service für den Roboter.

### Stand der Technik

Sich selbsttätig fortbewegende Roboter sind im Stand der Technik in einer Vielzahl von verschiedenen Ausführungsformen bekannt. Beispielsweise können diese als Bodenbearbeitungsroboter, insbesondere Reinigungsroboter wie Saugroboter und/oder Wischroboter ausgebildet sein. Des Weiteren können diese Roboter jedoch auch Transportroboter, Rasenmähroboter oder ähnliche sein.

Die Roboter sind bevorzugt mit einer Sensorik ausgestattet, um Hindernisse in der Umgebung zu detektieren. Beispielsweise kann ein Roboter eine Abstandsmesseinrichtung auf der Basis von Ultraschallwellen oder Lichtwellen aufweisen, mit welcher Abstände zu Hindernissen gemessen werden. Aus den gemessenen Abstandsdaten können dann eine Umgebungskarte und/oder eine Fortbewegungsroute erstellt werden, um eine Fortbewegung des Roboters in der Umgebung ohne eine Kollision mit Hindernissen zu ermöglichen.

Die Druckschriften DE 10 2011 000 536 A1 und DE 10 2008 014 912 A1 zeigen beispielsweise als Saug- und/oder Reinigungsroboter ausgebildete Geräte zur Reinigung von Fußböden.

Derartige Roboter werden üblicherweise durch Eingabe einer bestimmten Tastenkombination auf einer Tastatur oder einem Touchscreen des Roboters in einen Servicemodus versetzt. Des Weiteren ist es auch bekannt, einen Servicemodus, welcher beispielsweise das Aufspielen einer neuen Gerätesoftware zum Ziel hat, unter Zuhilfenahme eines physischen Speichermediums durchzuführen, das an den Roboter angeschlossen wird.

Obwohl sich die vorgenannten Verfahren im Stand der Technik grundsätzlich bewährt haben, ist es für einen Nutzer gegebenenfalls jedoch unkomfortabel, den Servicemodus über eine Tasteneingabe an dem Roboter zu aktivieren oder eine physische Verbindung des Roboters mit einem Speichermedium herstellen zu müssen.

Des Weiteren ist im Stand der Technik die WO 2015/007315 A1 bekannt, welche ein Verfahren zum drahtlosen Übertragen von Informationen von einem externen Endgerät an einen sich selbsttätig fortbewegenden Roboter beschreibt. Übertragene Informationen können beispielsweise einzustellende Parameter des Roboters sein. Die Informationen werden in einen optischen Code, beispielsweise QR-Code, integriert, welcher auf dem externen Endgerät angezeigt wird und von dem Roboter ausgelesen werden kann.
Die EP 3 096 021 A1 betrifft ein Vakuumgerät auf dessen Display Diagnosedaten angezeigt werden können. Die Diagnosedaten können durch ein anderes Gerät abgerufen, beispielsweise abfotografiert, werden.
Des Weiteren offenbart die DE 10 2015 224 308 A1 ein Manipulatorsystem mit einem Manipulator und einer mobilen Bedienvorrichtung. Um sicherzustellen, dass die Bedienvorrichtung zur Bedienung des Manipulators in der Nähe des Manipulators ist, übermittelt der Manipulator eine Kennung an die Bedienvorrichtung, welche auf einem Display der Bedienvorrichtung angezeigt und von dem Manipulator wiederum ausgelesen werden kann. Durch einen Vergleich der von dem Manipulator übermittelten und von dem Manipulator zurückempfangenen Kennung wird bestätigt, dass sich die Bedienvorrichtung in der Nähe des Manipulators befinden muss.

### Zusammenfassung der Erfindung

Ausgehend von dem beschriebenen Stand der Technik ist es daher Aufgabe der Erfindung, einen Servicemodus des Roboters komfortabel einleiten und durchführen zu können.

Die Erfindung ist in den unabhängigen Ansprüchen definiert.

Zur Lösung der vorgenannten Aufgabe wird mit der Erfindung vorgeschlagen, dass ein den Steuerbefehl aufweisender optischer Code auf einem externen Endgerät dargestellt wird, wobei der optische Code mittels einer Bilderfassungseinrichtung des Roboters detektiert wird, und wobei eine Steuereinrichtung des Roboters den Steuerbefehl aus dem optischen Code extrahiert und den Servicemodus eröffnet, wobei der Roboter in einem Arbeitsmodus und in dem Servicemodus betrieben werden kann, wobei der Roboter durch ein in dem optischen Code enthaltenes definiertes Kommando von dem Arbeitsmodus in den Servicemodus geschaltet werden kann, wobei in dem optischen Code eine Kennung von dem externen Endgerät an den Roboter übermittelt wird, wobei die Kennung eine digitale Signatur aufweist, die eine Verifikation, ob es sich um einen für den Roboter zulässigen optischen Code handelt, ermöglicht, wobei die Kennung mit in einem Speicher des Roboters oder einer mit dem Roboter in Kommunikationsverbindung stehenden externen Serviceeinrichtung gespeicherten definierten Kennung verglichen wird, wobei der Servicemodus nur dann freigeschaltet wird, wenn die übermittelte Kennung mit einer definierten Kennung übereinstimmt.

Der Steuerbefehl zum Eröffnen des Servicemodus wird in einen optischen Code integriert, welchen eine Bilderfassungseinrichtung des Roboters von einem externen Endgerät ablesen kann. Die Bilderfassungseinrichtung kann beispielsweise eine Kamera oder auch ein Kamerachip, wie beispielsweise ein CCD-Chip oder CMOS-Chip, sein. Das externe Endgerät kann vorzugsweise ein mobiles Endgerät, insbesondere ein Mobiltelefon, ein Tablet-Computer, ein Laptop oder ähnliches sein. Der optische Code wird vorzugsweise auf einem Display des externen Endgerätes angezeigt, wobei ein Nutzer das externe Endgerät so vor die Bilderfassungseinrichtung des Roboters hält, dass diese den optischen Code erfassen kann. Grundsätzlich kann das externe Endgerät auch eine nur zum Einleiten des Servicemodus vorgesehene Einrichtung sein, welche auf einem Display oder, gemäß einer besonders einfachen Ausgestaltung, auf einer Gehäuseoberseite oder ähnlichem einen optischen Code aufweist. Der optische Code kann dabei auch permanent auf eine Oberfläche aufgebracht sein. In diesem Sinne kann das externe Endgerät beispielsweise auch lediglich eine Codekarte sein, welche der Nutzer oder ein Servicetechniker vor die Bilderfassungseinrichtung des Roboters hält. Der optische Code kann in allen vorgenannten Fällen beispielsweise ein QR-Code, ein Strichcode, z. B. Barcode, eine mehrfarbige Mosaikgrafik, bekannt als sogenannte photoTAN beim Onlinebanking, oder ein sonstiger ein Muster aufweisender Code sein.

Insgesamt kann der Roboter somit ohne direkte Tasteneingabe an dem Roboter oder sonstige physische Handhabung des Roboters in den Servicemodus geschaltet werden, um in diesem vordefinierte Servicetätigkeiten durchzuführen.

Über einen speziell zum Einleiten eines Servicemodus vorgesehenen Code lässt sich des Weiteren auch sicherstellen, dass ein Servicetechniker keinen Zugriff auf persönliche Daten des Nutzers des Roboters erhält, welche in dem Roboter oder auch in einem über eine Kommunikationsverbindung mit dem Roboter verknüpften externen Speicher gespeichert sind. Bei autonom arbeitenden Robotern, insbesondere IoT-Geräten (Internet of Things), ist üblicherweise ein Kundenkonto mit einem bestimmten Gerät bzw. Roboter assoziiert. Dazu wird beispielsweise in einer Kundendatenbank eine Verknüpfung zwischen einem Benutzernamen und einer eindeutigen Gerätekennung, wie beispielsweise einer MAC-Adresse oder einer Seriennummer, erstellt. Eine Verknüpfung zwischen dem Roboter und einem Kundenkonto erfolgt dann beispielsweise so, dass während eines Konfigurationsschritts Kontoinformationen mittels eines externen Gerätes, insbesondere eines mobilen Endgerätes mit einer entsprechenden Applikation, an den Roboter übermittelt werden, wobei der Roboter dann wiederum unter Zuhilfenahme der Kontoinformationen und der Gerätekennung eine Anfrage zur Verknüpfung an eine externe Serviceeinrichtung, beispielsweise einen Webserver des Roboterherstellers, übermittelt. Neben der Verknüpfung mit einem bestimmten Kundenkonto werden häufig noch persönliche Daten und Einstellung, z. B. Zugangsinformationen für ein WLAN-Netzwerk des Kunden oder Passwörter, auf dem Roboter bzw. in der Kundendatenbank gespeichert. Wenn ein mit einem solchen Kundenkonto verknüpfter Roboter zu Reparatur- und/oder Servicezwecken an einen Servicetechniker gegeben wird, sollte sichergestellt werden, dass durch die Serviceleistung keine Benutzereinstellungen verloren gehen und kein Zugriff auf sensible Kundendaten erfolgt. Mittels der erfindungsgemäßen Initiierung des Servicemodus über einen optischen Code kann der Servicemodus so aktiviert werden, dass Kundendaten und/oder -einstellungen ausgeblendet werden und dem Servicetechniker stattdessen ausschließlich spezielle Kommandos oder Operationen zur Verfügung gestellt werden, die einem Nutzer vorzugsweise nicht zugänglich sind. Insbesondere werden Zugriffsrechte für den Nutzer und Zugriffsrechte für den Servicetechniker voneinander getrennt. Besonders bevorzugt existieren zwei Konfigurationsbereiche nebeneinander, zum einen ein Standardbereich für Kundendaten, und zum anderen ein geschützter Speicherbereich für den Servicemodus. Während eines normalen Arbeitsmodus des Roboters, bei welchem dieser beispielsweise eine Reinigungsaufgabe ausführt, ist nur der Konfigurationsbereich für die Kundendaten zugänglich. Der Konfigurationsbereich für den Servicemodus ist vorzugsweise verschlüsselt. Die Freigabe des Konfigurationsbereiches erfolgt durch Erfassen, Authentifizieren, Entschlüsseln und Identifizieren des vorgenannten optischen Codes. Wenn der Roboter einen entsprechenden validen optischen Code detektiert, wird der Servicemodus initiiert und der die Kundendaten enthaltende Konfigurationsbereich ausgeblendet und/oder verschlüsselt. Dies kann beispielsweise durch eine temporäre Verschlüsselung erfolgen, die unter Verwendung der Gerätekennung und eines Zeitstempels erfolgt. Sobald der Servicemodus beendet wird, wird der normale, die Kundendaten enthaltende Konfigurationsbereich wieder freigegeben und stattdessen der Servicemodus-Konfigurationsbereich ausgeblendet bzw. verschlüsselt.

In dem Konfigurationsbereich für die Kundendaten kann ein Nutzer des Roboters beispielsweise Netzwerkinformationen, Kundenkontoinformationen, Umgebungskarten einer zu reinigenden Umgebung, gegebenenfalls inklusive korrespondierender Verschmutzungsinformationen, Reinigungspläne, kundenspezifische Geräteeinstellungen oder ähnliches speichern. Der Konfigurationsbereich für den Servicemodus kann beispielsweise eine URL einer externen Serviceeinrichtung, eine Netzwerkinformation für den Servicemodus, einen Programmcode für eine Servicetätigkeit oder ähnliches enthalten.

Ein in dem Servicemodus des Roboters bereitgestellter Service kann vordefinierte Kommandos und/oder Operationen für einen Servicetechniker enthalten, beispielsweise ein Zurücksetzen des Roboters auf eine Werkseinstellung, ein Starten einer Selbstdiagnose, ein Löschen oder Hinzufügen einer Netzwerkverbindung, ein Übertragen einer Statusinformation oder einer LOG-Datei an eine externe Serviceeinrichtung (z. B. an eine Service-Cloud), ein Durchführen eines Firmware-Updates oder weiteres.

Üblicherweise verwendete optische Codes ermöglichen nicht nur die Codierung eines Befehls und zugehöriger Zusatzinformation, bspw. URLs, sondern auch die Integration einer digitalen Signatur, bspw. kryptografische Hashfunktionen und/oder Public-Key-Signaturen. Die digitale Signatur ermöglicht eine Verifikation, ob es sich um einen für den Roboter zulässigen Code handelt. Nur wenn der Code zulässig ist, wird der Servicemodus gestartet, andernfalls nicht.

Des Weiteren wird vorgeschlagen, dass zur Eröffnung des Servicemodus ein Befehl zum Erzeugen eines optischen Codes an das externe Endgerät übermittelt wird. Ein Servicetechniker nutzt dafür beispielsweise eine auf dem externen Endgerät installierte Applikation. Die Applikation kann zunächst eine Auswahlmöglichkeit für einen von mehreren möglichen Servicemodus zur Verfügung stellen. Nach der Auswahl des gewünschten Servicemodus wird gegebenenfalls eine Kennung generiert, die neben dem Kommando zum Eröffnen des gewünschten Servicemodus in den optischen Code integriert werden soll, beispielsweise eine Signatur, eine Hashfunktion, eine Zufallszahl oder weiteres. Die Kennung wird beim Auswerten des optischen Codes zur Verifizierung des Codes herangezogen, wobei der optische Code von dem Roboter nur dann akzeptiert wird, wenn dieser als valider Code erkannt wird. Des Weiteren kann auch eine Information über einen Servicetechniker, beispielsweise dessen Namen, in den optischen Code integriert werden. Damit kann im Sinne eines Rechtemanagements gewährleistet werden, dass nur bestimmte Personen bestimmte Kommandos ausführen dürfen. Alternativ kann in einer Datenbank des Roboters oder einer externen Serviceeinrichtung gespeichert werden, welche Person wann welches Kommando ausgeführt hat.

Des Weiteren wird vorgeschlagen, dass der Servicemodus beinhaltet, dass der Roboter ein Aktivitätsprotokoll an eine externe Serviceeinrichtung und/oder das externe Endgerät übermittelt oder eine Softwareaktualisierung von einer externen Serviceeinrichtung anfordert. Das Aktivitätsprotokoll beinhaltet eine Aufzeichnung von ausgeführten Aktivitäten und/oder Prozessen des Roboters, bekannt als sogenannte LOG-Datei. Bei der Softwareaktualisierung kann es sich insbesondere um ein Firmwareupdate handeln, welches im Rahmen eines sogenannten OTA-Updates (over the air) durchgeführt wird.

Gemäß einer besonderes bevorzugten Ausführung wird vorgeschlagen, dass das externe Endgerät eine nur für eine vorgegebene Zeitspanne gültige Kennung erzeugt, wobei die Kennung einerseits in den von dem externen Endgerät angezeigten optischen Code integriert wird, und andererseits an eine externe Serviceeinrichtung, insbesondere einen Webserver, übermittelt wird. Die für eine vorgegebene Zeitspanne gültige Kennung ist eine Einmalkennung, beispielsweise bekannt als sogenanntes Security-Token/Softwaretoken, die häufig genutzt wird, um einen Service zeitlich begrenzt zur Verfügung zu stellen und/ oder um den Nutzer einer Kennung zu identifizieren. Die Einmalkennung wird, beispielsweise durch einen Zufallsgenerator, auf dem externen Endgerät erzeugt, welches auch den optischen Code darstellt. Die Einmalkennung wird sowohl an den Roboter (durch Integration in den optischen Code), als auch an die externe Serviceeinrichtung übermittelt.

Insbesondere kann vorgesehen sein, dass der Roboter ein Aktivitätsprotokoll und die von dem externen Endgerät übermittelte Kennung an die externe Serviceeinrichtung übermittelt, wobei die externe Serviceeinrichtung prüft, ob die Kennung gültig ist und das Aktivitätsprotokoll im Falle der Gültigkeit der Kennung an das externe Endgerät übermittelt. Wenn der Roboter nun ein Aktivitätsprotokoll (z. B. LOG-Daten) an die externe Serviceeinrichtung übermittelt, wird beispielsweise ein zeitlich beschränkt gültiger Einmalcode von dem Roboter an die externe Serviceeinrichtung übertragen, woraufhin die externe Serviceeinrichtung prüft, ob der Einmalcode noch innerhalb der definierten Zeitspanne benutzt wird.

Des Weiteren kann vorgesehen sein, dass der Roboter eine Anforderung für eine Softwareaktualisierung einer auf dem Roboter installierten Software, insbesondere Firmware, und eine von dem externen Endgerät übermittelte Kennung an die externe Serviceeinrichtung übermittelt, wobei die externe Serviceeinrichtung prüft, ob die Kennung gültig ist und die Softwareaktualisierung im Falle der Gültigkeit der Kennung an den Roboter übermittelt.

Schließlich kann vorgesehen sein, dass der Servicemodus zeitgesteuert, durch Neustart des Roboters oder durch Erfassung eines einen entsprechenden Steuerbefehl enthaltenden optischen Codes beendet wird. Nach Beendigung des Servicemodus kann ein Nutzer wieder einen Arbeitsmodus des Roboters nutzen. Dabei ist der normale, die Kundendaten enthaltende Konfigurationsbereich wieder freigegeben und der Servicemodus-Konfigurationsbereich ausgeblendet bzw. verschlüsselt.

Neben dem zuvor beschriebenen Verfahren wird mit der Erfindung des Weiteren auch ein sich selbsttätig fortbewegender Roboter, insbesondere ein Reinigungsroboter, vorgeschlagen, welcher eine Bilderfassungseinrichtung aufweist, wobei der Roboter zur Ausübung eines zuvor beschriebenen Verfahrens ausgebildet ist.

Des Weiteren wird ein System aus einem eine Bilderfassungseinrichtung aufweisenden, sich selbsttätig fortbewegenden Roboter, einem externen Endgerät zur Anzeige eines optischen Codes und einer externen Serviceeinrichtung zum Bereitstellen eines Service für den Roboter vorgeschlagen, wobei der Roboter zur Ausübung eines zuvor beschriebenen Verfahrens ausgebildet ist.

Sowohl in Bezug auf den erfindungsgemäßen Roboter, als auch in Bezug auf das erfindungsgemäße System gelten die zuvor bereits in Bezug auf das erfindungsgemäße Verfahren beschriebenen Merkmale und dadurch erreichten Vorteile. Der Roboter kann beispielsweise ein Bodenbearbeitungsroboter, insbesondere ein Reinigungsroboter wie Saugroboter und/oder Wischroboter sein. Des Weiteren können diese Roboter jedoch auch Transportroboter, Rasenmähroboter oder ähnliche sein. Das externe Endgerät kann ein mobiles Endgerät, beispielsweise ein Mobiltelefon, ein Tablet-Computer, ein Laptop oder ähnliches sein, des Weiteren jedoch auch eine bloße Code-Karte oder eine Einrichtung, die einen permanenten optischen Code auf einer Oberfläche trägt. Die externe Serviceeinrichtung ist vorzugsweise ein Server, mit welchem der Roboter und vorzugsweise auch das externe Endgerät in Kommunikationsverbindung stehen. Insbesondere kann die externe Serviceeinrichtung ein Webserver des Roboter-Herstellers sein.

### Kurze Beschreibung der Zeichnungen

Im Folgenden wird die Erfindung anhand von Ausführungsbeispielen näher erläutert. Es zeigen:
- Fig. 1: ein System aus einem Roboter, einem externen Endgerät und einer externen Serviceeinrichtung,
- Fig. 2: ein Ablaufplan eines erfindungsgemäßen Verfahrens gemäß einer ersten Ausführungsform,
- Fig. 3: ein Ablaufplan eines erfindungsgemäßen Verfahrens gemäß einer zweiten Ausführungsform.

### Beschreibung der Ausführungsformen

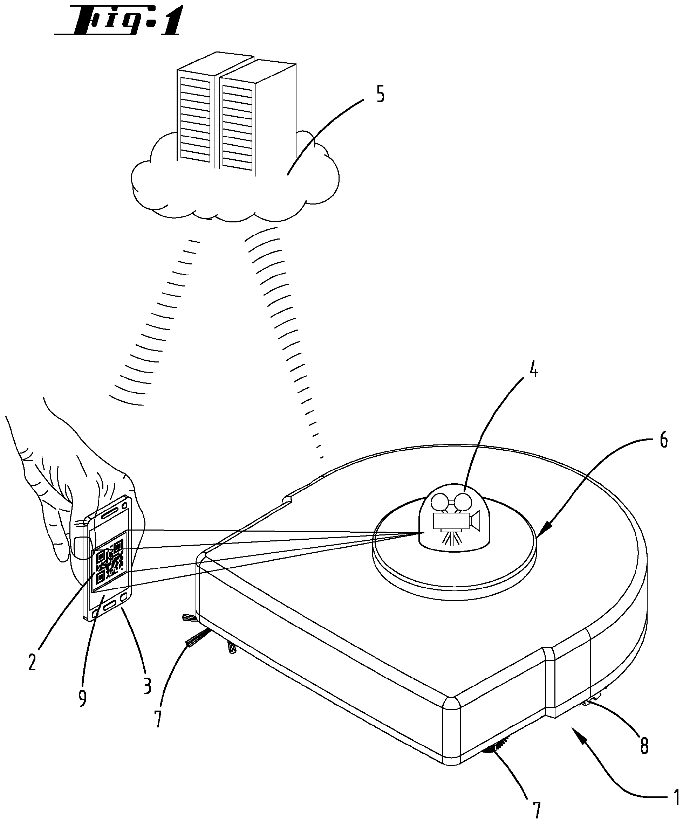

Figur 1 zeigt ein System aus einem Roboter 1, einem externen Endgerät 2 und einer externen Serviceeinrichtung 5.

Der Roboter 1 ist hier als sich selbsttätig fortbewegender Saugroboter ausgebildet und verfügt über motorisch angetriebene Räder 8, mit deren Hilfe er sich innerhalb einer Umgebung fortbewegen kann. Des Weiteren weist der Roboter 1 Reinigungselemente 7 auf, nämlich eine Seitenbürste 7 und eine Borstenwalze, welche der Einwirkung auf eine zu reinigende Fläche dienen. Weiter weist der Roboter 1 im Bereich der Reinigungselemente 7 eine nicht weiter dargestellte Saugmundöffnung auf, über welche mittels einer Motor-Gebläse-Einheit mit Sauggut beaufschlagte Luft in den Roboter 1 eingesaugt werden kann. Für die Elektroversorgung der einzelnen Elektrokomponenten des Roboters 1, wie für den Antrieb der Räder 8 und der Reinigungselemente 7 und darüber hinaus weiter vorgesehene Elektronik, weist der Roboter 1 einen nicht dargestellten, wiederaufladbaren Akkumulator auf. Der Roboter 1 ist des Weiteren mit einer Abstandsmesseinrichtung 6 ausgestattet, welche hier beispielsweise eine Triangulationsmesseinrichtung aufweist. Die Abstandsmesseinrichtung 6 misst Abstände zu Hindernissen und Wänden innerhalb der Umgebung des Roboters 1. Die Abstandsmesseinrichtung 6 weist im Einzelnen beispielsweise eine Laserdiode auf, deren emittierter Lichtstrahl über eine Umlenkeinrichtung aus einem Gehäuse des Roboters 1 herausgeführt und um eine in der gezeigten Orientierung des Roboters 1 senkrechte Drehachse rotierbar ist, insbesondere mit einem Messwinkel von 360 Grad. Dadurch ist eine Rundum-Abstandsmessung um den Roboter 1 möglich. Mit Hilfe der Abstandsmesseinrichtung 6 kann die Umgebung des Roboters 1 in einer bevorzugt horizontalen Ebene vermessen werden, d.h. in einer zu der zu reinigenden Fläche parallelen Ebene. Dadurch kann der Roboter 1 unter Vermeidung einer Kollision mit Hindernissen und Wänden in der Umgebung verfahren. Die mittels der Abstandsmesseinrichtung 6 aufgenommenen Messdaten, welche Abstände zu Hindernissen und/oder Wänden in der Umgebung darstellen, werden zur Erstellung einer Umgebungskarte der Umgebung genutzt. Diese Umgebungskarte kann in einem lokalen Speicher des Roboters 1 oder auch in einem Speicher der externen Serviceeinrichtung 5 gespeichert werden. Des Weiteren kann der Roboter 1 bspw. einen nicht dargestellten Odometrie-Sensor aufweisen, welcher eine von dem Roboter 1 zurückgelegte Wegstrecke misst. Des Weiteren ist es auch möglich, dass der Roboter 1 bspw. Kontaktsensoren oder dergleichen aufweist. Des Weiteren verfügt der Roboter 1 über eine Bilderfassungseinrichtung 4, hier beispielsweise eine Kamera. Die Bilderfassungseinrichtung 4 nimmt digitale Bilder der Umgebung auf, welche von einer der Bilderfassungseinrichtung 4 zugeordneten Recheneinrichtung mittels eines entsprechenden Programms zur digitalen Bildverarbeitung ausgewertet werden können.

Das externe Endgerät 3 ist hier beispielsweise ein Mobiltelefon, nämlich ein Smartphone, welches ein Display 9 aufweist. Auf dem Display 9 des Endgerätes 3 ist ein optischer Code 2 dargestellt, der mittels der Bilderfassungseinrichtung 4 und der Recheneinrichtung des Roboters 1 detektiert und ausgelesen werden kann.

Die externe Serviceeinrichtung 5 ist hier ein Webserver, der von dem Hersteller des Roboters 1 im Internet zur Verfügung gestellt wird. Sowohl zwischen dem externen Endgerät 3 und der externen Serviceeinrichtung 5, als auch zwischen dem Roboter 1 und der externen Serviceeinrichtung 5 besteht eine drahtlose Kommunikationsverbindung.

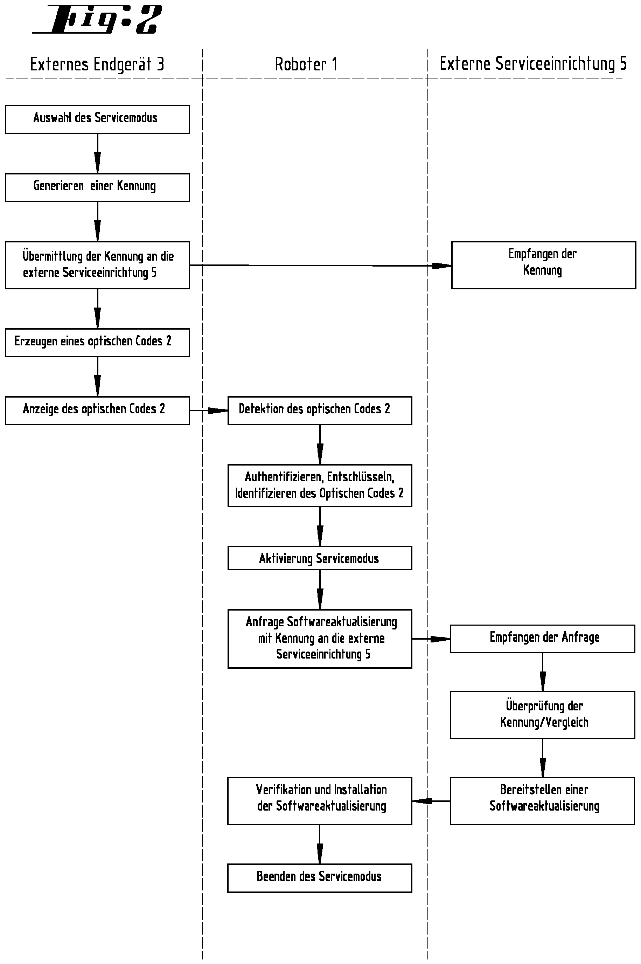

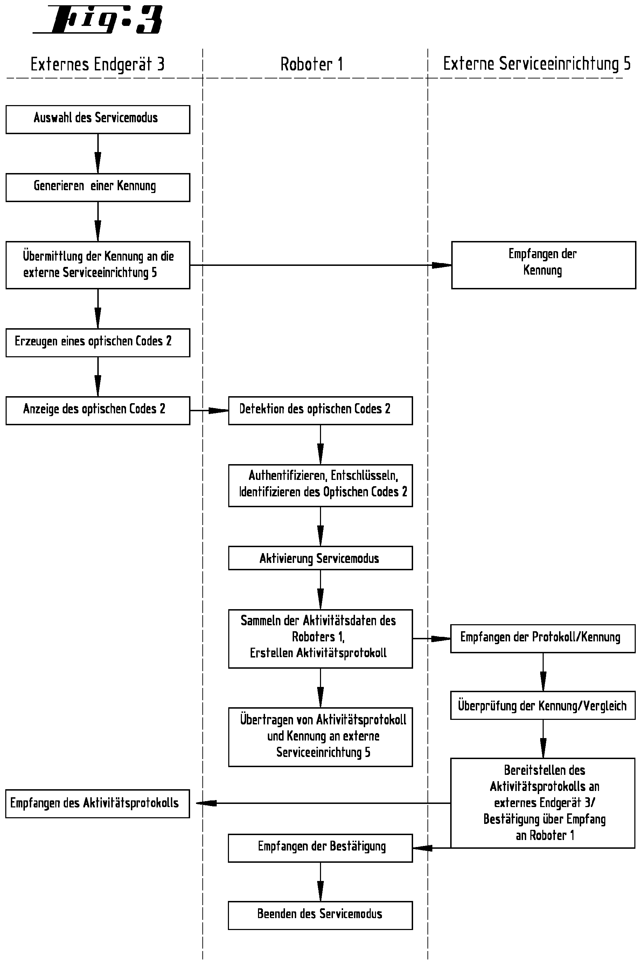

Die Figuren 2 und 3 zeigen beispielhafte Ablaufpläne für zwei unterschiedliche Ausführungsformen eines Verfahrens zum Betrieb des in Figur 1 dargestellten Systems.

Figur 2 betrifft ein Verfahren, bei welchem eine Software des Roboters 1, beispielsweise eine Firmware, aktualisiert wird. Das Verfahren beinhaltet hier ein OTA-Update (over the air). Das Firmware-Update wird hier mittels des externen Endgerätes 3 initiiert, welches ein Endgerät 3 eines Nutzers des Roboters 1 oder auch ein Endgerät 3 eines Servicetechnikers sein kann.

Zunächst wählt hier beispielsweise ein Servicetechniker über eine auf dem Endgerät 3 installierte Applikation einen Servicemodus aus, welcher zum Durchführen einer Softwareaktualisierung geeignet ist. Daraufhin generiert die Applikation mittels eines Zufallsgenerators eine Kennung, welche den optischen Code 2 gegenüber dem Roboter 1 als validen Code ausweist. Die Kennung ist hier beispielsweise ein Einmalcode, bestehend aus einer Hashfunktion, einer Zufallszahl und dem Namen des Servicetechnikers, der das Update ausführt. Die auf dem Endgerät 3 installierte Applikation generiert daraufhin den optischen Code 2, welcher hier ein QR-Code ist. Der optische Code 2 beinhaltet das Kommando zum Eröffnen des gewünschten Servicemodus, nämlich hier zum Durchführen der Softwareaktualisierung, und die generierte Kennung. Der optische Code 2 kann des Weiteren auch optionale Informationen enthalten, beispielsweise WLAN-Zugangsdaten, eine URL der externen Serviceeinrichtung 5 und/oder eine Vorgangsnummer, z. B. eine Ticket-Nummer, für die Zuordnung des Roboters 1 zu einem Servicevorgang. Die generierte Kennung wird als solche des Weiteren auch von dem Endgerät 3 an die externe Serviceeinrichtung 5 übermittelt. Die Übermittlung kann über eine aufgerufene URL erfolgen. Des Weiteren ist es denkbar, dass eine Information über eine Version einer angeforderten Softwareaktualisierung, Informationen bezüglich einer Benutzergruppe oder Benutzerrechten und/oder eine Vorgangsnummer mit an die externe Serviceeinrichtung 5 übertragen werden.

Der erzeugte optische Code 2 wird auf dem Display 9 des Endgerätes 3 dargestellt. Das Endgerät 3 wird daraufhin so vor den Roboter 1 geführt, dass sich das Display 9 des Endgerätes 3 innerhalb eines Erfassungsbereichs der Bilderfassungseinrichtung 4 des Roboters 1 befindet. Die Bilderfassungseinrichtung 4 erfasst den optischen Code 2, welcher daraufhin mittels der Recheneinrichtung des Roboters 1 authentifiziert, entschlüsselt und identifiziert wird. Das darin enthaltene Kommando zum Durchführen der Softwareaktualisierung leitet den gewählten Servicemodus ein. Die in dem optischen Code 2 ebenfalls enthaltene Kennung wird mit einer Anfrage zum Bereitstellen der Softwareaktualisierung an die externe Serviceeinrichtung 5 übermittelt. Die Anfrage kann zusätzliche Informationen über eine Version der Softwareaktualisierung, eine Geräte-ID des Roboters 1, z. B. eine MAC-Adresse oder Seriennummer, eine Vorgangsnummer oder einen selektierten Servicemodus enthalten. Die externe Serviceeinrichtung 5 empfängt die Anfrage des Roboters 1, sowie die gegebenenfalls weiteren Informationen, die die Abarbeitung des Vorgangs steuern. Außerdem kann die externe Serviceeinrichtung 5 ein Timeout definieren, welches die Zeit bis zum Empfangen der Anfrage des Roboters 1 nach dem Empfangen der Kennung von dem externen Endgerät 3 definiert. Die externe Serviceeinrichtung 5 vergleicht die von dem Roboter 1 übermittelte Kennung mit der von dem externen Endgerät 3 übermittelten Kennung. Bei Übereinstimmung dieser überträgt die externe Serviceeinrichtung 5 die neue Software-Version, speziell sogenannte Software-Images, an den Roboter 1. Dort wird die Software-Version verifiziert und installiert. Der Roboter 1 kann als Antwort gegebenenfalls auch eine Bestätigungsnachricht an die externe Serviceeinrichtung 5 übermitteln, welche das erfolgreiche Empfangen und Prüfen bestätigt. Anschließend wird der Servicemodus durch einen Neustart des Roboters 1 beendet.

Figur 3 betrifft ein Verfahren, bei welchem ein Aktivitätsprotokoll eines Roboters 1, nämlich eine LOG-Datei, an eine externe Serviceeinrichtung 5 bzw. von dort aus an ein externes Endgerät 3 übertragen wird. Das externe Endgerät 3 kann auch hier wieder ein Endgerät 3 eines Nutzers des Roboters 1 oder ein Endgerät 3 eines Servicetechnikers sein. Hier wird angenommen, dass es sich um ein Endgerät 3 eines Servicetechnikers handelt.

Zunächst wählt der Servicetechniker über eine auf dem Endgerät 3 installierte Applikation einen Servicemodus aus, welcher zum Anfordern eines Aktivitätsprotokolls geeignet ist. Daraufhin generiert die Applikation mittels eines Zufallsgenerators eine Kennung, welche den optischen Code 2 gegenüber dem Roboter 1 als validen Code ausweist. Die Kennung ist hier beispielsweise ein Einmalcode, bestehend aus einer Hashfunktion, einer Zufallszahl und dem Namen des Servicetechnikers, der das Update ausführt. Die auf dem Endgerät 3 installierte Applikation generiert daraufhin den optischen Code 2, welcher hier ein QR-Code ist. Der optische Code 2 beinhaltet das Kommando zum Eröffnen des gewünschten Servicemodus, nämlich hier zum Erstellen des Aktivitätsprotokolls, und die generierte Kennung. Der optische Code 2 kann des Weiteren optionale Informationen enthalten, beispielsweise WLAN-Zugangsdaten, eine URL der externen Serviceeinrichtung 5 und/oder eine Vorgangsnummer, z. B. eine Ticket-Nummer, für die Zuordnung des Roboters 1 zu einem Servicevorgang. Die generierte Kennung wird als solche des Weiteren auch von dem Endgerät 3 an die externe Serviceeinrichtung 5 übermittelt. Die Übermittlung kann über eine aufgerufene URL erfolgen. Des Weiteren ist es denkbar, dass zusätzlich Informationen bezüglich einer Benutzergruppe oder Benutzerrechten und/oder eine Vorgangsnummer mit an die externe Serviceeinrichtung 5 übertragen werden.

Der erzeugte optische Code 2 wird auf dem Display 9 des Endgerätes 3 dargestellt. Das Endgerät 3 wird daraufhin so vor den Roboter 1 geführt, dass sich das Display 9 des Endgerätes 3 innerhalb eines Erfassungsbereichs der Bilderfassungseinrichtung 4 des Roboters 1 befindet. Die Bilderfassungseinrichtung 4 erfasst den optischen Code 2, welcher daraufhin mittels der Recheneinrichtung des Roboters 1 authentifiziert, entschlüsselt und identifiziert wird. Das darin enthaltene Kommando zum Erstellen eines Aktivitätsprotokolls aktiviert den gewählten Servicemodus. Eine Recheneinrichtung des Roboters 1 sammelt die Aktivitätsdaten des Roboters 1 und erstellt ein Aktivitätsprotokoll. Daraufhin wird das erstellte Aktivitätsprotokoll mitsamt der aus dem optischen Code 2 extrahierten Kennung an die externe Serviceeinrichtung 5 übermittelt. Die externe Serviceeinrichtung 5 empfängt das Aktivitätsprotokoll und die Kennung und vergleicht die von dem Roboter 1 erhaltene Kennung mit der zuvor von dem externen Endgerät 3 empfangenen Kennung. Bei Übereinstimmung der Kennungen stellt die externe Serviceeinrichtung 5 das empfangene Aktivitätsprotokoll für das externe Endgerät 3 zum Abrufen bereit oder übermittelt das Aktivitätsprotokoll an das externe Endgerät 3. Die externe Serviceeinrichtung 5 sendet eine Empfangsbestätigung an den Roboter 1. Anschließend wird der Servicemodus des Roboters 1 beendet, beispielsweise durch einen Neustart des Roboters 1.

## Patentansprüche

1. Verfahren zum Betrieb eines sich selbsttätig fortbewegenden Roboters (1), wobei ein Steuerbefehl zum Eröffnen eines Servicemodus an den Roboter (1) übermittelt wird, wobei in dem Servicemodus vordefinierte Servicetätigkeiten durchgeführt werden und ein Service für den Roboter (1) bereitgestellt wird, wobei ein den Steuerbefehl aufweisender optischer Code (2) auf einem externen Endgerät (3) dargestellt wird, wobei der optische Code (2) mittels einer Bilderfassungseinrichtung (4) des Roboters (1) detektiert wird, wobei eine Steuereinrichtung des Roboters (1) den Steuerbefehl aus dem optischen Code (2) extrahiert und den Servicemodus eröffnet, wobei der Roboter (1) in einem Arbeitsmodus und in dem Servicemodus betrieben werden kann, und wobei der Roboter (1) durch ein in dem optischen Code (2) enthaltenes definiertes Kommando von dem Arbeitsmodus in den Servicemodus geschaltet werden kann,
**dadurch gekennzeichnet,**
**dass** in dem optischen Code (2) eine Kennung von dem externen Endgerät (3) an den Roboter (1) übermittelt wird, dass die Kennung eine digitale Signatur aufweist, die eine Verifikation, ob es sich um einen für den Roboter (1) zulässigen optischen Code handelt, ermöglicht, dass die Kennung mit in einem Speicher des Roboters (1) oder einer mit dem Roboter (1) in Kommunikationsverbindung stehenden externen Serviceeinrichtung (5) gespeicherten definierten Kennung verglichen wird, und dass der Servicemodus nur dann freigeschaltet wird, wenn die übermittelte Kennung mit einer definierten Kennung übereinstimmt.

2. Verfahren nach Anspruch 1, **dadurch gekennzeichnet, dass** zur Eröffnung des Servicemodus ein Befehl zum Erzeugen eines optischen Codes (2) an das externe Endgerät (3) übermittelt wird.

3. Verfahren nach Anspruch 1 oder 2, **dadurch gekennzeichnet, dass** der Servicemodus beinhaltet, dass der Roboter (1) ein Aktivitätsprotokoll an eine externe Serviceeinrichtung (5) und/oder das externe Endgerät (3) übermittelt oder eine Softwareaktualisierung von einer externen Serviceeinrichtung (5) anfordert.

4. Verfahren nach einem der vorhergehenden Ansprüche, **dadurch gekennzeichnet, dass** das externe Endgerät (3) eine nur für eine vorgegebene Zeitspanne gültige Kennung erzeugt, wobei die Kennung einerseits in den von dem externen Endgerät (3) angezeigten optischen Code (2) integriert wird, und andererseits an eine externe Serviceeinrichtung (5), insbesondere einen Webserver, übermittelt wird.

5. Verfahren nach einem der vorhergehenden Ansprüche, **dadurch gekennzeichnet, dass** der Roboter (1) ein Aktivitätsprotokoll und die von dem externen Endgerät (3) übermittelte Kennung an die externe Serviceeinrichtung (5) übermittelt, wobei die externe Serviceeinrichtung (5) prüft, ob die Kennung gültig ist und das Aktivitätsprotokoll im Falle der Gültigkeit der Kennung an das externe Endgerät (3) übermittelt.

6. Verfahren nach einem der vorhergehenden Ansprüche, **dadurch gekennzeichnet, dass** der Roboter (1) eine Anforderung für eine Softwareaktualisierung einer auf dem Roboter (1) installierten Software und eine von dem externen Endgerät (3) übermittelte Kennung an die externe Serviceeinrichtung (5) übermittelt, wobei die externe Serviceeinrichtung (5) prüft, ob die Kennung gültig ist und die Softwareaktualisierung im Falle der Gültigkeit der Kennung an den Roboter (1) übermittelt.

7. Verfahren nach einem der vorhergehenden Ansprüche, **dadurch gekennzeichnet, dass** der Servicemodus zeitgesteuert, durch Neustart des Roboters (1) oder durch Empfang eines einen entsprechenden Steuerbefehl enthaltenden optischen Codes (2) beendet wird.

8. System umfassend einen eine Bilderfassungseinrichtung (4) aufweisenden, sich selbsttätig fortbewegenden Roboter (1), ein externes Endgerät (3) zur Anzeige eines optischen Codes (2) und eine externe Serviceeinrichtung (5) zum Bereitstellen eines Service für den Roboter (1), **dadurch gekennzeichnet, dass** das System zur Ausübung eines Verfahrens nach einem der vorhergehenden Ansprüche ausgebildet ist.

## Claims

1. A method for operating a self-traveling robot (1), wherein a control command for initiating a service mode is transmitted to the robot (1), and wherein predefined service activities are performed and a service is made available for the robot (1) in the service mode, wherein an optical code (2) containing the control command is displayed on an external terminal (3), wherein the optical code (2) is detected by means of an image acquisition device (4) of the robot (1), wherein a control device of the robot (1) extracts the control command from the optical code (2) and initiates the corresponding service mode, wherein the robot (1) can be operated in a working mode and in the service mode, and wherein the robot (1) can be switched from the working mode into the service mode with a defined command contained in the optical code (2), **characterized in that** an identifier is transmitted from the external terminal (3) to the robot (1) in the optical code (2), that the identifier has a digital signature which makes it possible to verify whether it is an optical code which is permissible for the robot (1), that the identifier is compared with a defined identifier stored in a memory of the robot (1) or an external service device (5) that is communicatively linked to the robot (1), and that the service mode is only released if the transmitted identifier corresponds to the defined identifier.

2. The method according to claim 1, **characterized in that** a command for generating an optical code (2) is transmitted to the external terminal (3) in order to initiate the service mode.

3. The method according to claim 1 or 2, **characterized in that** the service mode includes the robot (1) transmitting an activity protocol to an external service device (5) and/or the external terminal (3) or requesting a software update from an external service device (5).

4. The method according to one of the preceding claims, **characterized in that** the external terminal (3) generates an identifier that is only valid for a predefined time period, wherein the identifier is on the one hand integrated into the optical code (2) displayed on the external terminal (3) and on the other hand transmitted to an external service device (5), particularly a web server.

5. The method according to one of the preceding claims, **characterized in that** the robot (1) transmits an activity protocol and the identifier transmitted by the external terminal (3) to the external service device (5), wherein the external service device (5) checks if the identifier is valid and transmits the activity protocol to the external terminal (3) if the identifier is determined to be valid.

6. The method according to one of the preceding claims, **characterized in that** the robot (1) transmits a request for an update of software installed on the robot (1) and an identifier transmitted by the external terminal (3) to the external service device (5), wherein the external service device (5) checks if the identifier is valid and transmits the software update to the robot (1) if the identifier is determined to be valid.

7. The method according to one of the preceding claims, **characterized in that** the service mode is concluded in a time-controlled fashion by restarting the robot (1) or by receiving an optical code (2) containing a corresponding control command.

8. A system consisting of a self-traveling robot (1) with an image acquisition device (4), an external terminal (3) for displaying an optical code (2) and an external service device (5) for making available a service for the robot (1), **characterized in that** the system is designed for carrying out a method according to one of the preceding claims.

## Revendications

1. Procédé d'exploitation d'un robot (1) se déplaçant de manière autonome, une instruction de commande pour l'ouverture d'un mode de service étant transmise au robot (1), des activités de service prédéfinies étant exécutées dans le mode de service et un service étant mis à disposition du robot (1), un code optique (2) présentant l'instruction de commande étant représenté sur un terminal externe (3), le code optique (2) étant détecté au moyen d'un dispositif de détection d'images (4) du robot (1), un dispositif de commande du robot (1) extrayant l'instruction de commande du code optique (2) et ouvrant le mode de service, le robot (1) pouvant être exploité dans un mode de travail et dans le mode de service, et le robot (1) pouvant être commuté du mode de travail au mode de service par une commande définie contenue dans le code optique (2), **caractérisé en ce que**, dans le code optique (2), un identifiant est transmis au robot (1) par le terminal externe (3), **en ce que** l'identifiant présente une signature numérique qui permet de vérifier , s'il s'agit d'un code optique autorisé pour le robot (1), **en ce que** l'identification est comparée à une identification définie enregistrée dans une mémoire du robot (1) ou d'un dispositif de service externe (5) en liaison de communication avec le robot (1), et **en ce que** le mode de service n'est activé que si l'identification transmise correspond à une identification définie.

2. Procédé selon la revendication 1, **caractérisé en ce que** pour ouvrir le mode service, une commande de génération d'un code optique (2) est transmise au terminal externe (3).

3. Procédé selon la revendication 1 ou 2, **caractérisé en ce que** le mode de service implique que le robot (1) transmet un protocole d'activité à un dispositif de service externe (5) et/ou au terminal externe (3) ou demande une mise à jour du logiciel à un dispositif de service externe (5).

4. Procédé selon l'une des revendications précédentes, **caractérisé en ce que** le terminal externe (3) génère un identifiant valable uniquement pour un laps de temps prédéfini, l'identifiant étant d'une part intégré dans le code optique (2) affiché par le terminal externe (3), et d'autre part transmis à un dispositif de service externe (5), en particulier un serveur web.

5. Procédé selon l'une des revendications précédentes, **caractérisé en ce que** le robot (1) transmet un protocole d'activité et l'identifiant transmis par le terminal externe (3) au dispositif de service externe (5), le dispositif de service externe (5) vérifiant si l'identifiant est valide et transmettant le protocole d'activité au terminal externe (3) en cas de validité de l'identifiant.

6. Procédé selon l'une des revendications précédentes, **caractérisé en ce que** le robot (1) transmet au dispositif de service externe (5) une demande de mise à jour de logiciel d'un logiciel installé sur le robot (1) et un identifiant transmis par le terminal externe (3), le dispositif de service externe (5) vérifiant si l'identifiant est valide et transmettant la mise à jour de logiciel au robot (1) en cas de validité de l'identifiant.

7. Procédé selon l'une des revendications précédentes, **caractérisé en ce que** le mode de service est quitté de manière commandée dans le temps, par redémarrage du robot (1) ou par réception d'un code optique (2) contenant une instruction de commande correspondante.

8. Système comprenant un robot (1) se déplaçant automatiquement et présentant un dispositif d'acquisition d'images (4), un terminal externe (3) pour l'affichage d'un code optique (2) et un dispositif de service externe (5) pour fournir un service au robot (1), **caractérisé en ce que** le système est conçu pour mettre en oeuvre un procédé selon l'une des revendications précédentes.
